(19) **Europäisches Patentamt**

**European Patent Office**

**Office européen des brevets**

(11) **EP 1 344 230 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(51) Int Cl.⁷: **H01F 27/16**

(21) Anmeldenummer: 01997820.4

(22) Anmeldetag: **23.11.2001**

(86) Internationale Anmeldenummer:
**PCT/EP2001/013659**

(87) Internationale Veröffentlichungsnummer:
**WO 2002/043085 (30.05.2002 Gazette 2002/22)**

(54) **MITTELFREQUENZTRANSFORMATOR**

MEDIUM FREQUENCY TRANSFORMER

TRANSFORMATEUR MOYENNE FREQUENCE

(84) Benannte Vertragsstaaten:
**AT BE CH CY DE DK ES FI FR GB GR IE IT LI LU MC NL PT SE TR**

(30) Priorität: **23.11.2000 DE 10058080**

(43) Veröffentlichungstag der Anmeldung:
**17.09.2003 Patentblatt 2003/38**

(73) Patentinhaber: **Bombardier Transportation GmbH**
**13627 Berlin (DE)**

(72) Erfinder:
• **UMBRICHT, Stefan**
**CH-5417 Untersiggenthal (CH)**
• **SORG, Udo**
**CH-8003 Zürich (CH)**
• **STEINER, Michael**
**CH-8051 Zürich (CH)**
• **SCHIFFERLI, Rolf**
**CH-5703 Seon (CH)**
• **REINHOLD, Harry**
**76829 Landau (DE)**
• **BERTH, Matthias**
**CH-8002 Zürich (CH)**

(74) Vertreter: **Meyer, Hans-Joachim et al**
**COHAUSZ & FLORACK**
**Patent- und Rechtsanwälte**
**Bleichstrasse 14**
**40211 Düsseldorf (DE)**

(56) Entgegenhaltungen:
**EP-A- 0 680 055       EP-A- 0 932 168**
**DE-A- 2 854 520       US-A- 5 473 302**

**Beschreibung**

Die vorliegende Erfindung bezieht sich auf das Gebiet der Leistungselektronik, insbesondere auf das Gebiet der Transformatoren für Anwendungen in der Leistungselektronik im Mittelfrequenzbereich.

Nächstliegender Stand der Technik EP 0 680 055 A1 offenbart einen Hochfrequenztransformator mit einem Kern, einer Primärwicklung und einer verteilten Sekundärwicklung, wobei jeweils ein erster und ein zweiter Teil der Sekundärwicklung auf einer Seite der Primärwicklung angeordnet ist. Zwischen dem ersten Teil der Sekundärwicklung und der Primärwicklung sowie zwischen dem zweiten Teil der Sekundärwicklung und der Primärwicklung ist jeweils eine Isolation angeordnet. Die Primärwicklung weist eine hohle Kühlmittelwindung zur Durchleitung einer Kühlflüssigkeit auf. Die Sekundärwicklung kann ebenfalls eine hohle Kühlmittelwindung zur Durchleitung einer Kühlflüssigkeit aufweisen.

Aus der DE 198 02 760 A1 ist ein Koaxialtransformator mit einem eine Primär- und Sekundärwicklung bildenden Koaxialkabel bekannt. Dabei umschliesst mindestens ein Kern die Wicklungen und jedes Ende des Koaxialkabels ist mit einem Kabelendverschluss versehen, der die beiden Leiter des Koaxialkabels mit einem Primäranschluss und einem Sekundäranschluss verbindet, die elektrische Isolation sicherstellt und das elektrische Feld steuert. Vorzugsweise sind mehrere jeweils eine Primär- und Sekundärwicklung bildende und mit Kabelendverschlüssen versehene Wicklungen vorgesehen, wobei mittels Verbindungsbrücken eine Reihen- und/oder Parallelschaltung der einzelnen Primärwicklungen und/oder Sekundärwicklungen erfolgt und sich ein gemeinsamer äusserer Primäranschluss und äusserer Sekundäranschluss der Modulanordnung bildet.

Herkömmlich ist aus der DE 196 30 284 A1, die der EP 0 820 893 A3 entspricht, bekannt in einem Antriebssystem für ein Schienenfahrzeug zwei Teilsysteme über mindestens einen Transformator zu koppeln. Dabei ist in jedem der beiden Teilsysteme mindestens ein Vierquadrantensteller, mindestens ein Zwischenkreiskondensator und mindestens ein Wechselrichter angeordnet. Der Vierquadrantensteller des ersten Teilsystems ist über ein Eingangsfiltersystem an ein Wechselspannungsnetz angeschlossen und der Wechselrichter des zweiten Teilsystems mit einem Antriebsmotor verbunden. Dabei taktet der Vierquadrantensteller des ersten Teilsystems und der Wechselrichter des zweiten Teilsystems mit einer geringen Frequenz bis ungefähr 500 Hz, während der Wechselrichter des ersten Teilsystems und der Vierquadrantensteller des zweiten Teilsystems im Bereich zwischen 8 und 20 kHz betrieben werden.

Ausserdem ist aus Aachener Beiträge des ISEA, Band 9, "Optimierte Auslegung induktiver Bauelemente für den Mittelfrequenzbereich" bekannt, dass Drosseln und Transformatoren für Anwendungen in der modernen Leistungselektronik im mittleren Frequenzbereich, d.h. von 1 kHz bis 100 kHz, erhebliche Verlustleistungen in der Wicklung und im Magnetkern erzeugen, die über die Bauelementoberfläche abgeführt werden müssen. Derartige Transformationen werden oberhalb 1 kW in Halbo der Vollbrückenschaltung zur Potentialtrennung und Spannungsanpassung verwendet. In den beschriebenen Untersuchungen werden verschiedene Kernbauformen verwendet, beispielsweise E-Kern, ETD-Kern, U-Kern, I-Kern, PM(Potcore-Modul)-Kern, RM(rectangular-Modul)-Kern und Schalenkern sowie in Flachbauweise ein Kern mit Wicklungsfenstern, die mit Kupferband gefüllt sind. Dabei wurde festgestellt, dass der vorstehend erwähnte herkömmliche Koaxialtransformator die besten Ergebnisse liefert. Das Hauptproblem stellte die ungleichmässige Verteilung der Verlustwärme dar, da sich bei allen herkömmlichen Ausführungsformen hot spots bildeen, die zu einer lokalen Überhitzung führen können. Bei den untersuchten herkömmlichen Transformatoren erfolgte daher eine Kühlung durch Wärmeabtransport über Strahlung und freie Konvention sowie teilweise Ausbildung eines zusätzlichen Lüfters. Für das eigentliche Hauptproblem der Abführung der entstehenden Verlustleistung wurde jedoch keine Lösung vorgeschlagen, es gab lediglich ein Ergebnis betreffend die Minimierung der Verlustleistung.

Jedoch ist es in jeder dieser herkömmlichen Ausführungsformen immer aufwendig, einen Mittelfrequenztransformator auszubilden, da immer die Grösse und das Gewicht des Transformators gross sind und aufgrund des Problems mit der Abführung der Verlustleistung Kompromisse beim Entwurf des Transformators eingegangen werden müssen.

Daher ist es Aufgabe der vorliegenden Erfindung einen Mittelfrequenztransformator auszubilden, der beispielsweise auf dem Gebiet der Leistungselektronik zur Potentialtrennung und Spannungsanpassung verwendbar ist, der weniger Verlustleistung erzeugt, bei dem eine problemlose Abführung von Verlustleistung möglich ist und der eine verringerte Baugrösse und ein verringertes Gewicht im Vergleich zum Stand der Technik aufweist.

Erfindungsgemäss wird diese Aufgabe durch einen Mittelfrequenztransformator mit den Merkmalen des Patentanspruchs 1 gelöst. In der Unteransprüchen sind vorteilhafte Weiterbildungen der Erfindung angegeben.

Der erfindungsgemässe Mittelfrequenztransformator weist eine Kombination aus gutem Wirkungsgrad, geringer Streuung aufgrund der verschachtelten Wicklung, eine Isolation analog Motoren oder Generatoren, eine Wicklung mit wasserdurchflossenen Hohlleitern, Kerne mit stirnseitigen Kühlplatten sowie variable Windungsverhältnisse auf.

Hierdurch kann der herkömmliche bevorzugte Koaxialtrafo ersetzt werden, d.h. es ist eine leichtere, kleinere und kostengünstigere Ausführung durch Verwendung eines erfindungsgemässen Mittelfrequenztransformators realisierbar. Zudem weist dieser erfindungsgemässe Mittelfrequenztransformator ein flexibleres Windungsverhältnis auf und es ist ein zusätzlicher Einbau einer Zusatzspeisewicklung auf der Hochspannungsseite möglich.

Weitere Aufgaben, Vorteile und Merkmale der vorliegenden Erfindung werden aus der nachstehenden Beschreibung eines bevorzugten Ausführungsbeispiels der Erfindung in Verbindung mit der Zeichnung offensichtlich.

Es zeigen:

Fig. 1 eine Darstellung der Grundstruktur eines soft-switched DC/DC-Wandlers, in dem der erfindungsgemässe Mittelfrequenztransformator verwendet werden kann,

Fig. 2a eine schematische Darstellung einer herkömmlichen einfachen Wicklungsanordnung und Fig. 2b eine schematische Darstellung einer verteilten Wicklungsanordnung, wie sie in dem erfindungsgemässen Mittelfrequenztransformator verwendet werden kann,

Fig. 3a und 3b eine Draufsicht und eine Querschnittansicht eines erfindungsgemässen Mittelfrequenztransformators mit einer verteilten Wicklung,

Fig. 4 eine graphische Darstellung der äusseren Abmessungen eines Mittelfrequenztransformators für eine Konstante $L_\sigma$ als Funktion der Windungszahl N,

Fig. 5 eine graphische Darstellung des Kerngewichts als Funktion der Windungszahl N,

Fig. 6 eine graphische Darstellung des Gesamtverlustleistung als Funktion der Windungszahl N,

Fig. 7 eine graphische Darstellung des gesamten Mittelfrequenztransformatorvolumens $V_{Trafo}$ als einer Funktion der Windungszahl N,

Fig. 8a und 8b eine Darstellung von geformten Leiterwicklungen mit Hohlleitern,

Fig. 9 eine Querschnittdarstellung eines erfindungsgemässen Mittelfrequenztransformators,

Fig. 10 eine Querschnittansicht eines im erfindungsgemässen Mittelfrequenztransformator verwendbaren Kerns und

Fig. 11 eine dreidimensionale Darstellung eines Ausführungsbeispiels eines erfindungsgemässen Mittelfrequenztransformators in Verbindung mit einer Einrichtung zur Kernkühlung.

Nachfolgend wird der Aufbau eines erfindungsgemässen Mittelfrequenztransformators anhand eines bevorzugten Ausführungsbeispiels sowie Weiterbildungen dieses Ausführungsbeispiels genauer beschrieben.

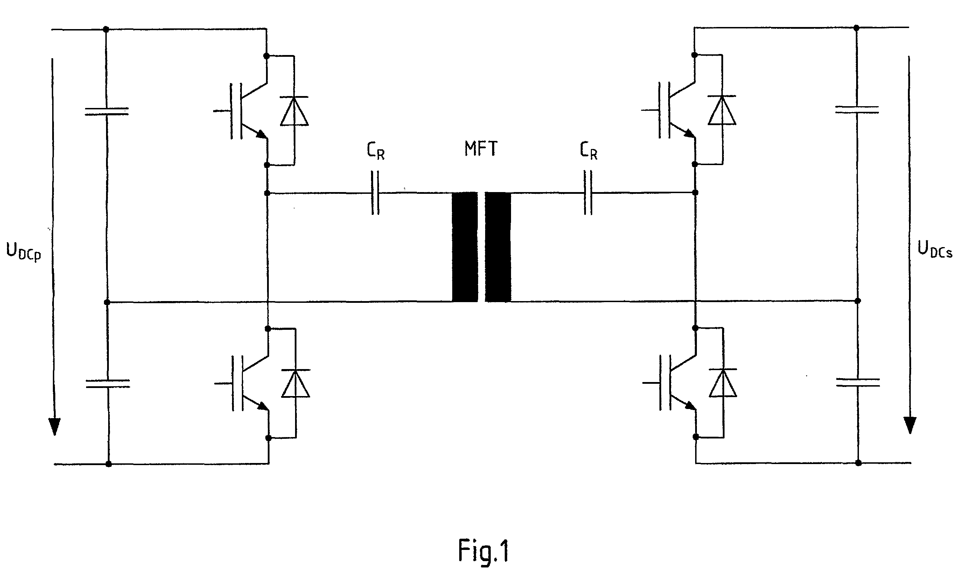

Der erfindungsgemässe Mittelfrequenztransformator MFT kann, wie in Fig. 1 gezeigt, Teil eines soft-switched DC/DC-Wandlers in jedem der zahlreichen Module sein, die auf der Primärseite in Reihe verbunden sind. Jedes Modul umfasst einen Vierquadrantensteller (4QS), einen primären DC-Zwischenkreis und einen resonanten DC/DC-Wandler. Die primären DC-Zwischenkreises sind gegenüber den sekundären DC-Zwischenkreisen durch den erfindungsgemässen Mittelfrequenztransformator MFT (ungefähr 6 bis 20kHz) potentialgetrennt, der ein Teil des DC/DC-Wandlers ist.

Der in Fig. 1 gezeigte DC/DC-Wandler funktioniert als ein Serienresonanzumsetzer (SRC). In dem erfindungsgemässen Mittelfrequenztransformator MFT wird durch die Serienresonanzschaltung, die aus einem Resonanzkondensator $C_R$ und der Streuinduktivität des Mittelfrequenztransformators MFT gebildet ist, ein annähernd sinusförmiger Strom erzeugt.

Die ungeregelte Funktion des DC/DC-Wandlers erfordert so weit wie möglich eine enge Kopplung zwischen den Primär- und Sekundärseiten. Um dieses Erfordernis zu erfüllen, muss eine möglichst geringe Streuinduktivität des Mittelfrequenztransformators MFT erzielt werden.

Die Streuinduktivität resultiert aus dem magnetischen Fluss, der die Primär- und Sekundärwicklungen nicht vollständig umschliesst oder nicht alle Windungen in der Wicklung vollständig umschliesst, die den Fluss erzeugen. Die Streuinduktivität ist dabei eine Funktion der magnetischen Energie im Wicklungsraum:

$$\frac{1}{2} \cdot L_\sigma \cdot I^2 = \frac{\mu_0}{2} \cdot \int \vec{H}^2 \cdot dV$$

Unter der Bedingung, dass ein homogenes Feld zwischen den Primär- und Sekundärwicklungen vorhanden ist, kann die folgende Gleichung für die Streuinduktivität abgeleitet werden:

$$L_\sigma = \frac{\mu_0 \cdot l_w \cdot N^2}{p^2 \cdot h_w} \cdot \left( \frac{b_{w\_total}}{3} + b_{iso\_total} \right)$$

wobei $l_w$ die mittlere Windungslänge, $N$ die Anzahl von Windungen, $h_w$ die Höhe der Wicklung, $b_{\_total}$ die Gesamtbreite der Wicklungen in dem Wicklungsfenster ($b_p + b_s$), $b_{iso\_total}$ die Gesamtzwischenwicklungsisolationsdicke innerhalb des Wicklungsfensters und p die Anzahl von Räumen zwischen Wicklungsabschnitten innerhalb des Wicklungsfensters sind.

Gemäss der vorstehenden Gleichung erhöht sich die Streuinduktivität mit dem Quadrat der Windungszahl. Wenn $L_\sigma$ verringert werden soll, indem die Windungszahl verringert wird, steigen die Kernverluste, wohingegen die Verluste in der Wicklung abnehmen werden.

Bei Betrachtung der vorstehenden Gleichung ist erkennbar, dass es möglich ist, die Streuinduktivität bedeutend zu verringern, indem eine verteilte Wicklungsanordnung verwendet wird, da $L_\sigma$ proportional $1/p^2$ ist.

Aus diesem Grund wird beim erfindungsgemässen Mittelfrequenztransformator eine derartig verteilte Wicklungsanordnung verwendet.

im folgenden wird der erfindungsgemässe Mittelfrequenztransformator mit verteilter Wicklungsanordnung am Beispiel eines 340 kW-Mittelfrequenztransformators beschrieben.

Der erfindungsgemässe Mittelfrequenztransformator ist gegenüber dem herkömmlich verwendeten Transformator klein in der Baugrösse, niedrig im Gewicht, weist eine sehr geringe Streuinduktivität bei hoher Isolierung, niedrige Kernverluste, niedrige Wicklungsverluste und ein variables Wicklungsverhältnis auf.

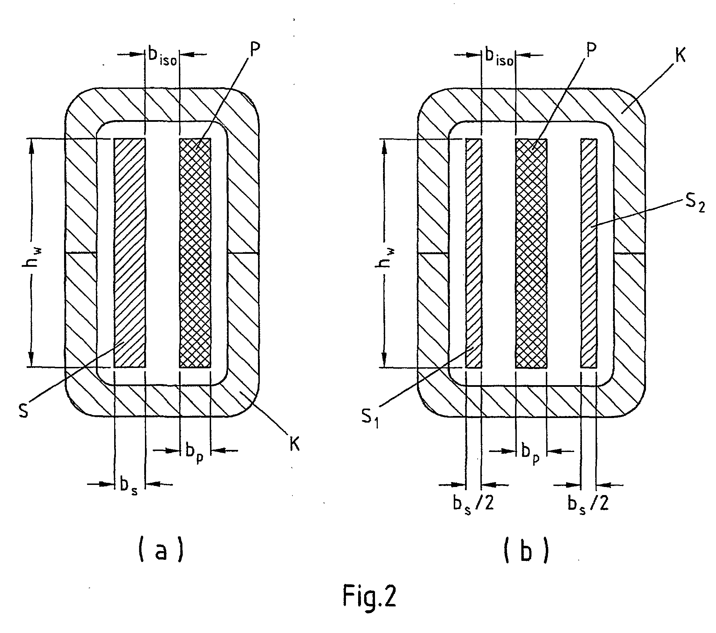

Insbesondere ist der Aufbau der verteilten Wicklungsanordnung in dem erfindungsgemässen Mittelfrequenztransformator im folgenden unter Bezugnahme auf Fig. 2 beschrieben. Dieser Aufbau bringt neben der verringerten Streuinduktivität weitere Vorteile mit sich:

- Eine kleinere Feldintensität innerhalb des Wickelfensters führt zu niedrigeren Verlusten durch Stromverdrängung.
- Die Verluste in einer Wicklung mit konstanter Leiterdicke und Frequenz sind geringer.

Fig. 2a zeigt im Querschnitt ein Wicklungsfenster einer herkömmlichen einfachen Wicklungsanordnung mit $p = 1$, während Fig. 2b ein Wicklungsfenster mit einer erfindungsgemässen verteilten Wicklung mit $p = 2$ veranschaulicht.

In Fig. 2a ist innerhalb eines Kerns K eine Primärwicklung P mit einer Dicke $b_P$ benachbart zu einer Sekundärwicklung S mit einer Dicke $b_S$ angeordnet. Beide Wicklungen P und S weisen eine Wicklungshöhe $h_W$ auf und sind durch eine Isolierung mit einer Breite $b_{iso}$ voneinander getrennt.

Bei der in Fig. 2b gezeigten erfindungsgemässen verteilten Wicklungsanordnung hingegen sind innerhalb des Kerns K auf beiden Seiten einer Primärwicklung P Sekundärwicklungsteile $S_1$ und $S_2$ angeordnet. Hierbei besitzen die Sekundärwicklungsteile $S_1$, $S_2$ jeweils eine Dicke $b_S/2$ und die Primärwicklung eine Dicke $b_P$, während der Abstand zwischen den Wicklungsteilen $S_1$, P, $S_2$ jeweils ein Isolationsabstand $b_{iso}$ ist. Die Höhe aller Wicklungen beträgt jeweils eine Wicklungshöhe $h_W$.

Durch die vorstehende erfindungsgemässe Aufteilung wird also trotz geringfügig vergrösserter Abmessungen das Ziel einer kleinen Streuinduktivität erreicht, ohne dass das Gewicht wesentlich zunimmt.

Der Isolationsabstand $b_{iso}$ ist mit einem Isolationsmaterial gefüllt, beispielsweise Harz mit oder ohne Glimmerzusatz, wie es bei der Motoren- oder Generatoren-Isolierung verwendet wird.

Um das magnetische Kern-Material, das relativ teuer ist, optimal zu nutzen, wurde beim bevorzugten Ausführungsbeispiel eine kreisförmige Wicklung mit quadratischem Querschnitt des Kerns gewählt.

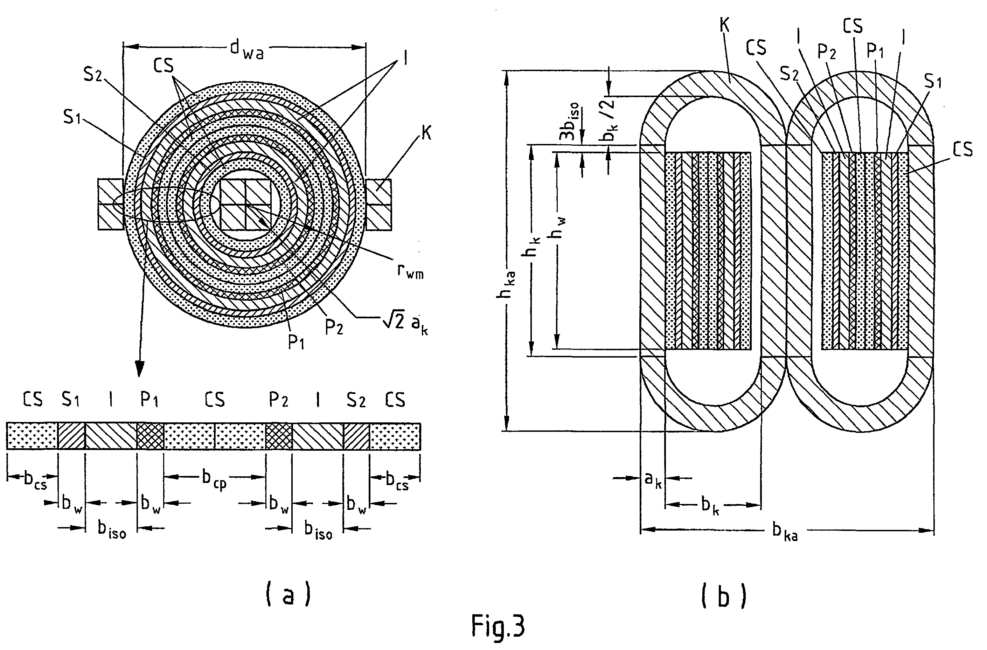

Natürlich ist es ebenfalls möglich, beispielsweise auch die Primärwicklung aufzuteilen, wie in Fig. 3a und 3b (Draufsicht und Seitenansicht) gezeigt. Dann entsteht die folgende Schichtenfolge, wenn die Kühlung ebenfalls mit berücksichtigt wird: Sekundärwicklungs-Kühlung CS mit einer Dicke $b_{CS}$, Sekundärwicklung $S_1$ mit einer Dicke $b_W$, Isolation I mit einer Dicke $b_{iso}$, Primärwicklung $P_1$ mit einer Dicke $b_W$, Primärwicklungs-Kühlung CS mit einer Dicke $b_{CP}$, Primärwicklung $P_2$ mit einer Dicke $b_W$, Isolation I mit einer Dicke $b_{iso}$, Sekundärwicklung $S_2$ mit einer Dicke $b_w$ sowie Sekundärwicklungs-Kühlung CS mit einer Dicke $b_{CS}$.

In Fig. 3b bezeichnet $h_{ka}$ die Gesamthöhe des Kerns, $b_{ka}$ die Gesamtbreite des Kerns und $b_k$ die Breite des Wickelfensters. Hierbei ist die Breite des Wickelfensters durch die Dicke der einzelnen Wicklungsbestandteile sowie die Dicke des Kerns K festgelegt.

Durch diese vorstehend beschriebene, erfindungsgemässe verteilte Wicklungsanordnung in Kombination mit den Primär- und Sekundärwicklungs-Kühlungen kann eine reduzierte Streuinduktivität mit optimaler Nutzung des Kern-Materials sowie mit einer verbesserten Abfuhr der Verlustwärme realisiert werden.

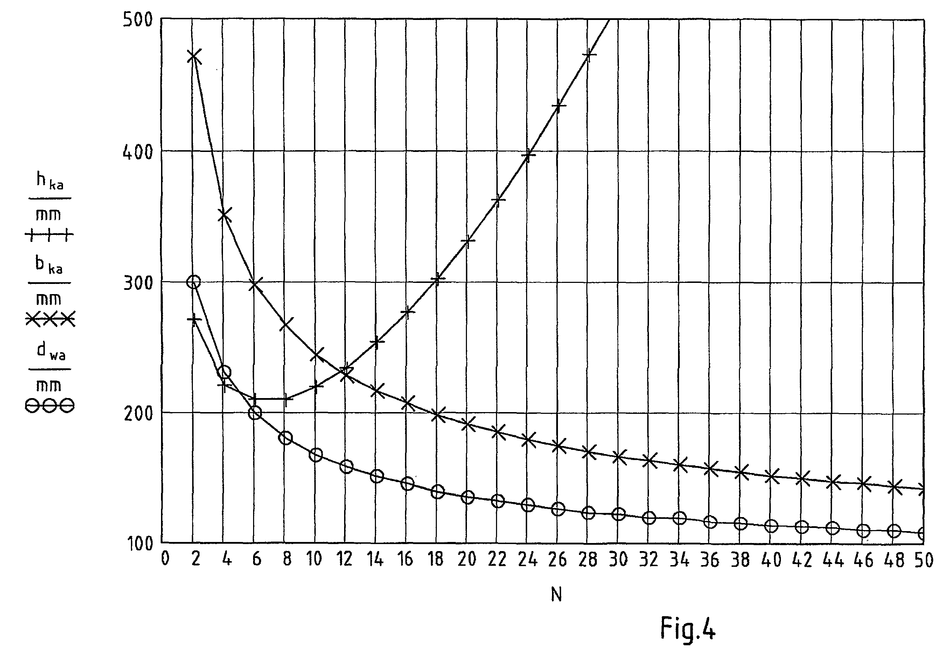

Fig. 4 zeigt die äussere Abmessung eines Mittelfrequenztransformators, wie oben beschrieben, mit einer konstanten Streuinduktivität $L_\sigma$ als Funktion der Windungszahl N. Wie aus Fig. 4 ersichtlich, wird eine Gesamthöhe des Kerns $h_{ka}$ sehr schnell zunehmen, wenn die Windungszahl N erhöht wird, wohingegen eine Gesamtbreite des Kerns $b_{ka}$ und ein äusserer Wicklungsdurchmesser $d_{wa}$ nur wenig abnehmen. Anhand dieser Kurven, die als Funktion der Windungszahl N aufgetragen sind, kann nun abhängig von der Windungszahl N für die jeweilige Kurve ein optimaler Wert für die Gesamtbreite des Kerns $b_{ka}$, den äusseren Wicklungsdurchmesser $d_{wa}$ sowie die Gesamthöhe des Kerns $h_{ka}$ bestimmt werden.

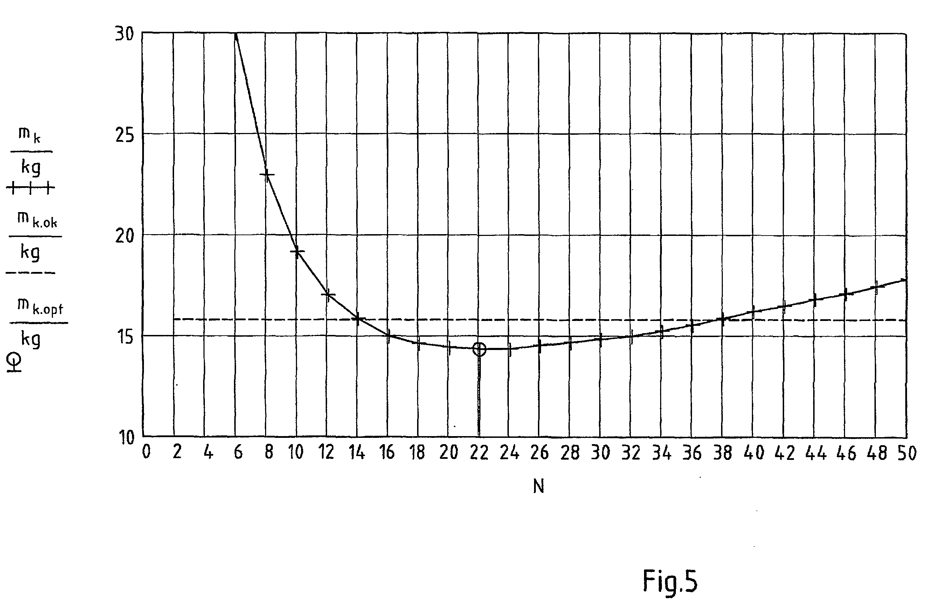

Aus Fig. 5, die das Kerngewicht als Funktion der Windungszahl N zeigt, ist ersichtlich, dass ein minimales Kerngewicht $m_k$ erreicht wird, wenn N =22 für die Windungszahl N gewählt wird.

Eine starke Verringerung der Gesamthöhe des Kerns $h_{ka}$ ohne nennenswerte Erhöhung der Gesamtbreite des Kerns $b_{ka}$ und des äusseren Wicklungsdurchmessers $d_{wa}$ kann im wesentlichen durch Wahl einer kleineren Windungszahl N erreicht werden. Das dabei entstehende 10% höhere Kerngewicht $m_k$ kann akzeptiert werden, wie in Fig. 5 gezeigt ($m_{k.ok}$).

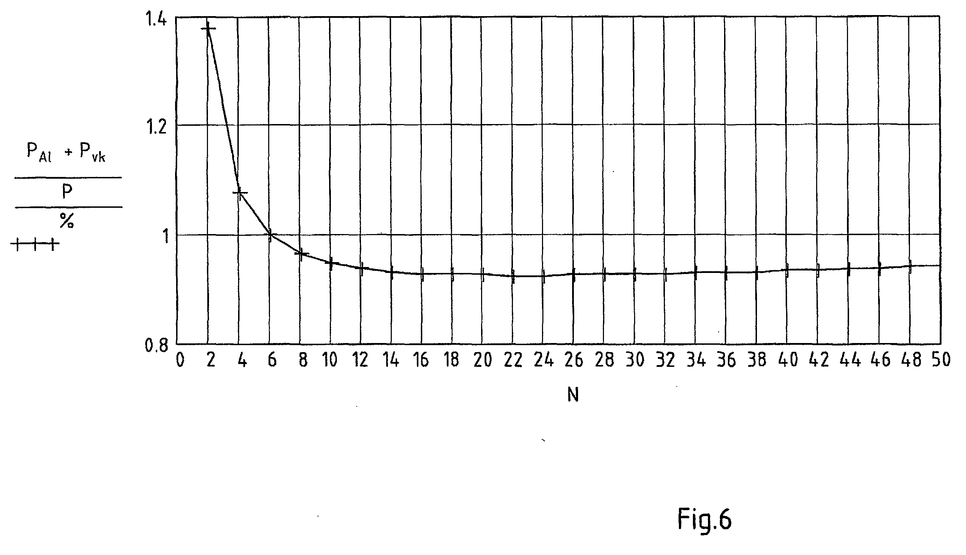

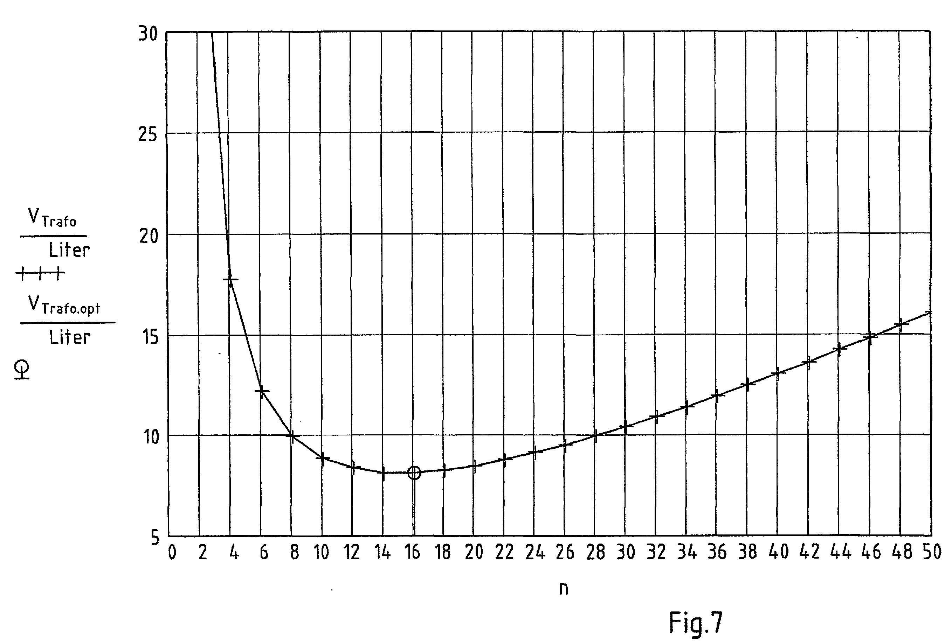

Fig. 6 veranschaulicht die Gesamtverlustleistung $P_{Al} + P_{vk}$ als Funktion der Windungszahl N, wobei $P_{Al}$ die Wicklungsverluste und $P_{vk}$ die Kernverluste angibt. Es ist ersichtlich, dass es keinen Einfluss auf die Verlustleistung gibt, wenn die Windungszahl von N = 22 auf N = 16 verringert wird. Eine bedeutende Zunahme des Energieverlusts beginnt erst mit N < 12. .Weiterhin zeigt Fig. 7 ein Gesamt-Mittelfrequenztransformatorvolumen $V_{Trafo}$ als Funktion der Windungszahl N. Das Volumen des Mittelfrequenztransformators $V_{Trafo}$ berechnet sich näherungsweise wie folgt: $V_{Trafo} \approx b_{ka} \cdot d_{wa} \cdot h_{ka}$. Wie aus Fig. 7 ersichtlich, wird das Gesamt-Mittelfrequenztransformatorvolumen $V_{Trafo}$ für N = 16 optimal ($V_{Trafo.opt}$ = 8,1 Liter).

Somit ergibt sich aus den Fig. 4 bis 7, dass vorteilhafterweise die Windungszahl N = 16 gewählt wird. Jedoch ist für den Fachmann selbstverständlich, dass abhängig von den Anforderungen an den Mittelfrequenztransformator auch andere Werte für N gewählt werden können, solange nur diese Anforderungen (beispielsweise Grösse, Volumen, ...) erfüllt sind.

Im folgenden wird nun näher auf die insbesondere in Fig. 3a und 3b gezeigte Isolation I und deren Aufbau und Zusammensetzung genauer eingegangen.

Als Isolation I, die zwischen den Primär- und den Sekundärwicklungsteilen $P_1$, $P_2$, $S_1$, $S_2$ angeordnet ist, ist ein Isolationssystem erforderlich, dass die folgenden Eigenschaften besitzt:

- Isolationsspannungen bis zu 30 kV
- äusserst lange Lebenszeit
- teilentladungsbeständiges Material

Als derartiges Material und Isolationssystem kann beispielsweise Micadur® basierend auf der Vakuumdruckimprägnierungs-Isoliertechnologie von ABB verwendet werden, ebenso aber auch andere Materialien und Isolationssysteme, sofern sie die vorstehenden Eigenschaften aufweisen.

Eine derartige Isolation besteht aus einer Kombination aus synthetischem Harz und anorganischen Isolationsmaterialien. Die Herstellung einer derartigen Isolation erfolgt folgendermassen. Es wird ein Glimmerband beispielsweise um einen oder mehrere vorgeformte Leiter gewickelt. Dieses stellt die Windungsisolation für den erfindungsgemässen Mittelfrequenztransformator dar.

Im folgenden werden die Herstellungsschritte für eine derartige Isolation kurz erläutert. Nach der Herstellung der Pimärwicklung P wird diese über ihre gesamte Länge mehrmals mit einem Isolationsband umwickelt. Diese Band besteht aus einem feinen Glastextil und einem Glimmer-Papier. Die Anzahl von Bandschichten hängt dabei von der gewünschten Isölationsspannung ab und besitzt im Fall des vorstehenden Beispiels für einen Mittelfrequenztransformator eine Dicke von 5mm. Danach werden die Primär- und Sekundärwicklungen P, $S_1$, $S_2$ zusammengefügt und mit einem Vakuumdruckimprägniervorgang behandelt. Als Imprägnierharz wird hierbei beispielsweise ein modifiziertes Epoxyd verwendet. Nach einer vollständigen Härtung behält die Isolation I ihre Form. Abschliessend wird eine Beschichtung mit niedrigem elektrischen Widerstand auf die Oberfläche der Isolation I aufgebracht, um Oberflächenspannungen zu vermeiden, die während der Funktion gefährlich wären. Im Bereich der Hochspannungsverbindung wird eine Beschichtung mit einer spannungsabhängigen Widerstandskennlinie aufgebracht ($10^6$ bis $10^{12}$ Ω).

Im folgenden wird nun auf die Gestaltung der Wicklung genauer eingegangen.

Aufgrund der hohen Betriebsfrequenz des Mittelfrequenztransformators, nämlich ungefähr im Bereich von 6 bis 20 kHz, müssen Wirbelstromverluste (Streu- und Proximityverluste) berücksichtigt werden. Einige Möglichkeiten zur Verringerung dieser Verluste in den Mittelfrequenztransformatorwicklungen werden nachstehend diskutiert.

Durch eine Aufteilung der Wicklung in zwei Abschnitte beträgt der Spitzenwert der magnetischen Feldstärke in einer verteilten Wicklung, wie in Fig. 2b gezeigt, ungefähr die Hälfte des Spitzenwerts in einer Wicklung mit nur einer Windung, wie in Fig. 2a gezeigt. Da die Wirbelstromverluste proportional dem Quadrat des magnetischen Flusses sind, können die Verluste in einer einzelnen verteilten Wicklung auf ein Viertel der einfachen Anordnung verringert werden.

Nachfolgend wird nun die Gestaltung der Wicklung unter Berücksichtigung von entstehender Verlustwäre diskutiert.

Bei Verwendung einer geformten Leiterwicklung anstelle einer konventionellen Folienwicklung wurde festgestellt, dass die Verlustleistung innerhalb der Wicklung bei dem beispielhaften Mittelfrequenztransformator um einen Faktor 4 ansteigt. Demzufolge erscheint die Leiterwicklung auf den ersten Blick weniger geeignet als die Folienwicklung. Bevorzugterweise wird jedoch dennoch bei dem erfindungsgemässen Mittelfrequenztransformator trotz der höheren Verluste eine geformte Leiterwicklung anstelle der Folienwicklung verwendet, da diese bedeutend einfacher gekühlt werden kann, was eine höhere Verlustleistung damit wieder wettmacht und zu wesentlich geringeren Temperaturunterschieden in der Leiterwicklung führt.

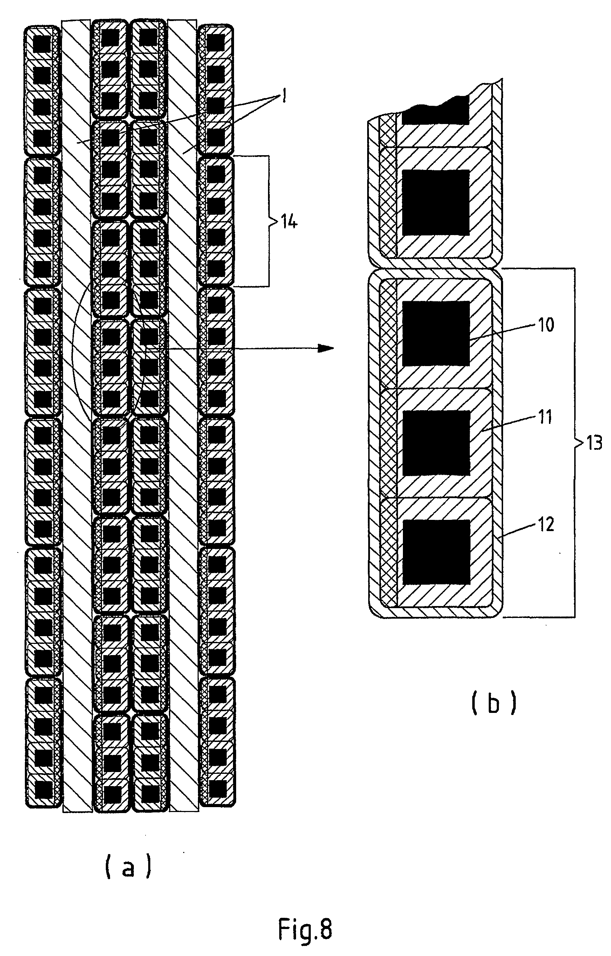

Als Leiter für eine derartige geformte Leiterwicklung wird in dem erfindungsgemässen Mittelfrequenztransformator vorzugsweise ein Hohlleiter verwendet, beispielsweise ein 5*5mm Aluminiumhohlprofil, wie in Fig. 8a und 8b gezeigt. Zur Verteilung bzw. Abführung der durch den Stromfluss entstehenden Wärme wird deionisiertes Kühlwasser 10 durch einen Hohlleiter 11 geleitet. Aufgrund dieses sehr effizienten Kühlsystems ergibt sich ein sehr geringer thermischer Widerstand und es ist möglich, grössere Stromdichten innerhalb des Hohlleiters 11 zu erlauben. Die berechnete Höhe der Wicklung $h_w$ wird bei einer einfach verschachtelten Wicklung und N=16 am besten verwendet, wenn für die Primärseite drei Hohlleiter 11 zusammen mit einer Isolierung 12 isoliert werden und dieses Bündel zusammen als ein Leiter 13 genommen wird. Bei einem Übersetzungs- bzw. Wicklungsverhältnis von 1,36 - bei beispielsweise einer primärseitigen Spannung $U_{DCp}$ = 3,8 kV und einer sekundärseitigen Spannung $U_{DCs}$ = 2,8 kV - sind auf der Sekundärseite 12 Wicklungen erforderlich. Zur besten Verwendung der berechneten Höhe der Wicklung $h_W$ wird auf der Sekundärseite daher ein Bündel 14 von vier geformten Leitern verwendet. Fig. 8a und 8b zeigen die endgültige Wicklungsanordnung, wobei der tatsächliche Stromführungsbereich 15, der durch die Eindringtiefe $\delta$ gegeben ist, schraffiert gezeigt ist.

Bevorzugterweise sollte der Innendurchmesser eines Hohlleiters 11 zur Einhaltung der Anforderungen einen Querschnittsbereich von 3*3mm aufweisen, was ausreichend ist, wenn 3 Leiter parallel angeordnet sind.

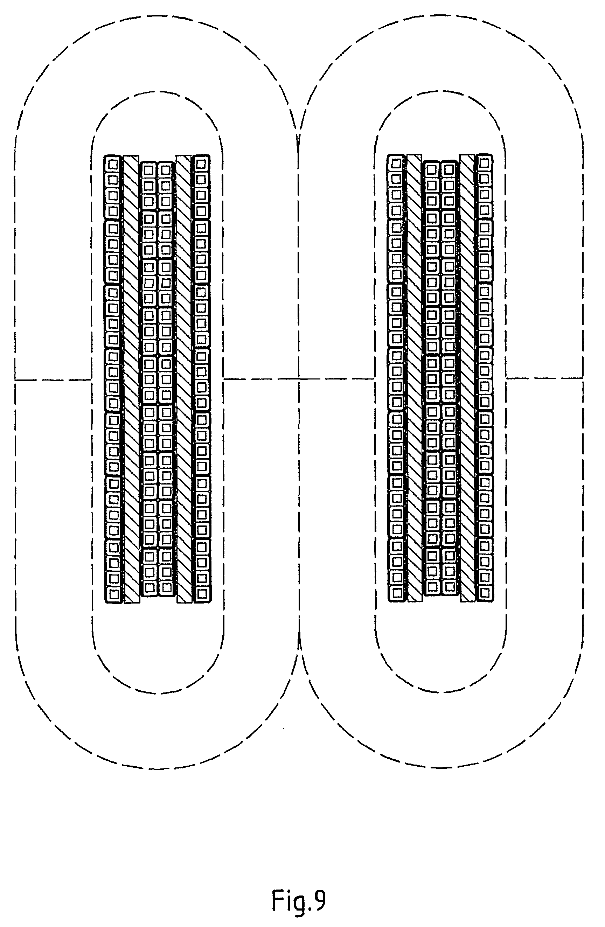

In Fig. 9 ist der erfindungsgemässe Mittelfrequenztransformator nochmals in einer Seitenansicht gezeigt, um einen Überblick über seinen Aufbau zu erhalten.

Abgesehen von den vorstehend beschriebenen Bestandteilen des Mittelfrequenztransformators trägt auch der Kern beträchtlich zur Leistungsfähigkeit des erfindungsgemässen Mittelfrequenztransformators bei.

Der Aufbau des Kerns hängt stark von Herstellungstoleranzen ab. Gefordert sind Herstellungstoleranzen von ± 5mm. Die Wicklungen können dabei sowohl rund als auch oval hergestellt sein.

Als Material für den Kern wird eine beispielsweise nano-kristalline Legierung verwendet, die die folgenden Merkmale aufweist:

- hohe Sättigungsinduktion
- kleine Baugrösse ebenso wie niedriges Gewicht bei ungefähr 6 bis 20 kHz durch hohen nutzbare Induktionshub
- niedrige Verluste mit sehr geringer Temperaturabhängigkeit oder sogar negativem Temperaturkoeffizienten bei ungefähr 6 bis 20 kHz
- mechanische Stabilität der beschichteten Kerne

Ein derartiges Material kann beispielsweise Vitroperm 500F von Vacuumschmelze GmbH sein, jedoch auch ein anderes auf dem Markt verfügbares Material mit de vorstehend erwähnten Eigenschaften, beispielsweise Ferrite oder Metglas von Honeywell.

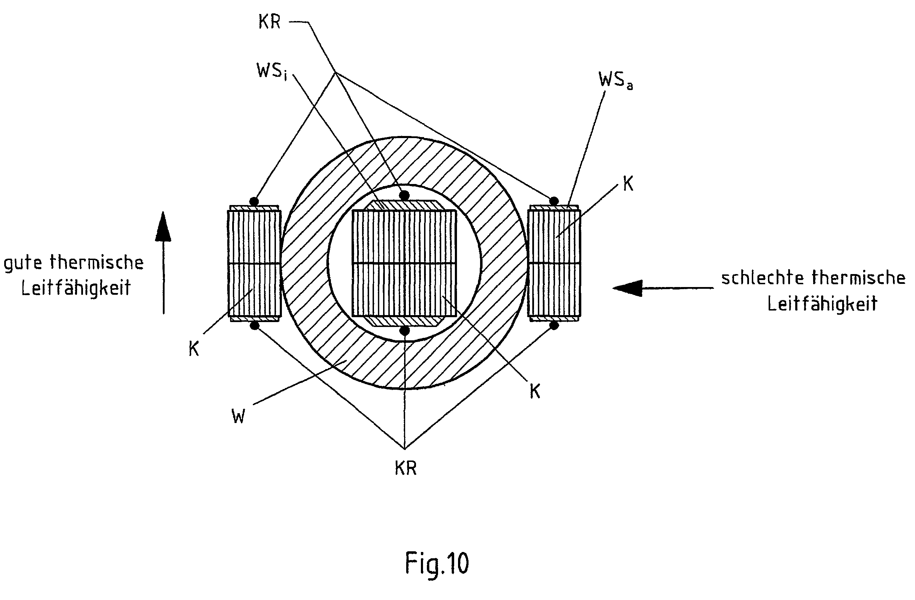

Ein Kern aus einem Material mit den vorstehend beschriebenen Eigenschaften ist in dünnen Schichten angeordnet. Das Band ist ungefähr 20 bis 50 µm dick und die thermische Leitfähigkeit hängt von der Richtung der Bänder ab. Die Beseitigung von in dem Kern erzeugter Wärme ist nur in der Längsrichtung der Kernschichten möglich, da in der Querrichtung die thermische Leitfähigkeit sehr schlecht ist, wie in Fig. 10 gezeigt. Der Kern K besteht aus dünnen Materialschichten und weist jeweils einen Kühlkörper $WS_a$, $WS_i$ auf. Weiterhin ist sind ausserhalb der Kühlkörper $WS_i$, $WS_a$ Kühlrohre angeordnet, über die eine Kühlung der Kühlkörper $WS_i$, $WS_a$ erfolgt.

Um in den beiden Kernhälften ausgeglichene magnetische Widerstände und daher eine ausgeglichene Induktion zu erhalten, kann zwischen den beiden Kernhälften ein schmaler Luftspalt von beispielsweise einigen 10 µm vorgesehen werden, der in Fig. 10 jedoch nicht erkennbar ist.

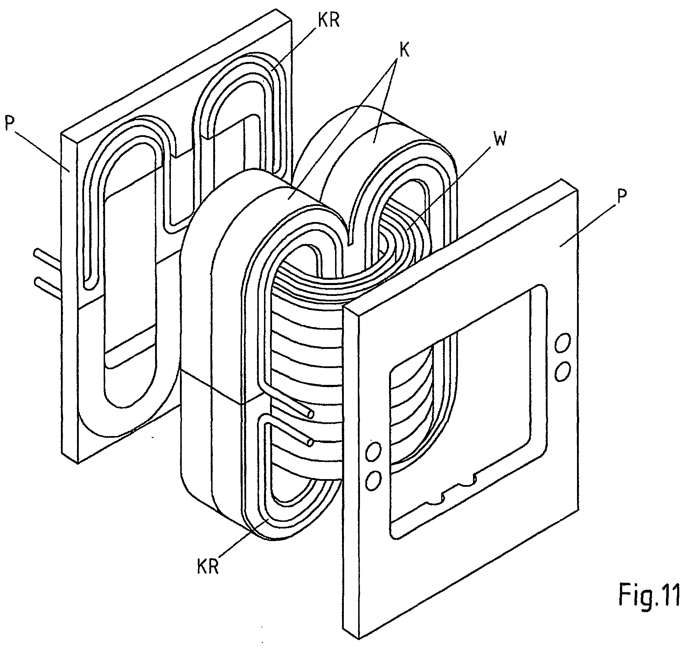

In Fig. 11 ist eine dreidimensionale Darstellung des in Fig. 10 gezeigten erfindungsgemässen Mittelfrequenztransformators in Verbindung mit einer bevorzugten Ausführungsform einer Einrichtung zur Kernkühlung gezeigt. In der Mitte der Anordnung befindet sich der zweiteilige Kern K mit der Wicklung W. An den Stirnseite des Kerns sind Kühlrohre KR angeordnet, die von Kühlwasser durchflossen werden und einen wesentlichen Beitrag zur Kühlung des Kerns K leisten. Die Enden dieser Kühlrohre KR werden in beispielsweise einem 90° Winkel senkrecht zu der jeweiligen Stirnfläche des Kern herausgeführt und passieren Durchgangslöcher in Abdeckplatten P, die zur Verschraubung des geschichteten Kerns K und der Wicklung W dienen. Zusätzlich sind für den erfindungsgemässen Mittelfrequenztransformator noch Halterungen und Anschlüsse ausgebildet, die jedoch in Fig. 11 zur Vereinfachung nicht dargestellt sind.

Somit kann mit dem erfindungsgemässen Mittelfrequenztransformator zuverlässig eine Isolierung von primären DC-Zwischenkreisen gegenüber sekundären DC-Zwischenkreisen erreicht werden, mit verringerter Grösse, geringerem Gewicht und verringerten Kosten als bisher üblich.

Zusammenfassend offenbart die vorliegende Erfindung einen Mittelfrequenztransformator, der beispielsweise in einem DC/DC-Wandler primäre DC-Zwischenkreise gegenüber sekundären DC-Zwischenkreisen isoliert. Der erfindungsgemässe Mittelfrequenztransformator weist einen zweigeteilten Kern auf sowie eine Primärwicklung und eine verteilte Sekundärwicklung, wobei ein erster und ein zweiter Teil der verteilten Sekundärwicklung auf jeweils einer Seite der Primärwicklung ausgebildet ist. Jede Wicklung besteht vorteilhafterweise aus einem Bündel von geformten Hohlleitern, die gemeinsam isoliert sind und von einer Kühlflüssigkeit durchflossen werden.

**Patentansprüche**

1. Mittelfrequenztransformator mit:

   einem Kern (K);
   einer Primärwicklung (P) ;
   einer verteilten Sekundärwicklung ($S_1$, $S_2$), wobei jeweils ein erster und ein zweiter Teil der Sekundärwicklung ($S_1$, $S_2$) auf einer Seite der Primärwicklung (P) angeordnet ist; wobei zwischen dem ersten Teil der Sekundärwicklung ($S_1$) und der Primärwicklung (P) sowie zwischen dem zweiten Teil der Sekundärwicklung

($S_2$) und der Primärwicklung (P) jeweils eine Isolation (I) angeordnet ist,

**dadurch gekennzeichnet, dass**
die Primärwicklung (P) sowie der erste und der zweite Teil der Sekundärwicklung ($S_1$, $S_2$) jeweils aus einem Bündel (14, 13) von geformten Hohlleitern (11) gebildet sind, die von einer Kühlflüssigkeit (10) durchflossen sind, wobei die Hohlleiter (11) jedes Bündels (14, 13) gemeinsam wie ein einzelner Leiter durch eine Isolierung (12) isoliert sind.

2. Mittelfrequenztransformator nach Anspruch 1, wobei die Primärwicklung ebenfalls als verteilte Wicklung ausgebildet ist, bei der ein erster und ein zweiter Teil der Primärwicklung ($P_1$, $P_2$) in der Ebene benachbart zueinander ausgebildet sind, in der ebenfalls der erste und der zweite Teil der Sekundärwicklung ($S_1$, $S_2$) angeordnet sind.

3. Mittelfrequenztransformator nach Anspruch 1 oder 2, wobei für ein Übersetzungsverhältnis von 1,36 die Primärseite 16 Windungen und die Sekundärseite 12 Windungen aufweist.

4. Mittelfrequenztransformator nach einem der Ansprüche 1 bis 3, wobei ein Bündel (14) von geformten Leitern in der Sekundärwicklung ($S_1$, $S_2$) sowie ein Bündel (13) von geformten Leitern in der Primärwicklung (P; $P_1$, $P_2$) jeweils einen oder mehrere Hohlleiter aufweist, wobei die Anzahl der Hohlleiter zwischen dem Bündel (14) von geformten Leitern in der Sekundärwicklung ($S_1$, $S_2$) und dem Bündel (13) von geformten Leitern in der Primärwicklung (P; $P_1$, $P_2$) sich voneinander unterscheiden kann.

5. Mittelfrequenztransformator nach einem der Ansprüche 1 bis 4, wobei die Hohlleiter aus einem Aluminiumhohlprofil bestehen.

6. Mittelfrequenztransformator nach einem der Ansprüche 1 bis 5, wobei als Kühlflüssigkeit (10) deionisiertes Wasser verwendet wird.

7. Mittelfrequenztransformator nach einem der Ansprüche 1 bis 6, wobei als Material für den Kern (K) eine nano-kristalline Legierung mit hoher Sättigungsflussdichte, kleiner Baugrösse, niedrigem Gewicht, nierigen Verlusten mit sehr geringer Temperaturabhängigkeit oder negativem Temperaturkoeffizienten und mechanischer Stabilität oder Ferrite mit entsprechenden Eigenschaften verwendet werden.

8. Mittelfrequenztransformator nach einem der vorhergehenden Ansprüche 1 bis 7, wobei der Kern (K) aus einer Vielzahl dünner Materialschichten, die sich senkrecht zur Anordnungsebene der Primär-

und Sekundärwicklungen (P; $P_1$, $P_2$, $S_1$, $S_2$) erstrecken, gebildet ist.

9. Mittelfrequenztransformator nach einem der Ansprüche 1 bis 8, wobei der Kern (K) aus zwei Hälften besteht, die sich in der Ebene, in der die Primär-und die Sekundärwicklung (P; $P_1$, $P_2$, $S_1$, $S_2$) nebeneinander angeordnet sind, befinden und zwischen diesen Kernhälften ein schmaler Luftspalt ausgebildet ist.

10. Mittelfrequenztransformator nach Anspruch 9, wobei der Luftspalt eine Breite von einigen 10 µm aufweist.

11. Mittelfrequenztransformator nach einem der vorhergehenden Ansprüche 1 bis 10, wobei
an der Stirnseite des Kerns (K) Kühlrohre (KR) zur Kühlung des Kerns (K) angeordnet sind.

12. Mittelfrequenztransformator nach einem der vorhergehenden Ansprüche 1 bis 11, wobei
die Isolation (I) zwischen der Primär- und der Sekundärwicklung (P; $P_1$, $P_2$, $S_1$, $S_2$) eine Hochspannungsisolation ist, die Isolationsspannungen bis zu 30kV aufweist und teilentladungsbeständig ist.

13. Mittelfrequenztransformator nach Anspruch 12, wobei
als Isolation eine Isolation verwendet wird, bei der die jeweilige Wicklung über ihre gesamte Länge mehrmals mit einem Glimmerband umwickelt ist und die Primär- und Sekundärwicklungen (P; $P_1$, $P_2$, $S_1$, $S_2$) zusammengefügt und mittels eines Imprägnierharzes vakuumdruckimprägniert und ausgehärtet sind.

14. Mittelfrequenztransformator nach Anspruch 13, wobei als Imprägnierharz modifiziertes Epoxyd verwendet ist.

15. DC/DC-Wandler mit einem Mittelfrequenztransformator nach einem der Ansprüche 1 bis 14, der primäre DC-Zwischenkreise gegenüber sekundären DC-Zwischenkreisen isoliert.

**Claims**

1. Medium-frequency transformer with:

    a core (K);
    a primary winding (P);
    a distributed secondary winding (S1, S2), wherein a respective first and second part of the secondary winding (S1, S2) is arranged on one side of the primary winding (P); wherein a respective insulation (I) is arranged between the first part of the secondary winding (S1) and the primary winding (P), and between the second part of the secondary winding (S2) and the primary winding (P);

**characterized in that** the primary winding (P) as well as the first and second part of the secondary winding (S1, S2) each is formed of a bundle (14, 13) of molded hollow conductors (11), which are passed by a coolant (10), wherein the hollow conductors (11) of each bundle (14, 13) are together insulated as a single conductor by an insulation (12).

2. Medium-frequency transformer according to claim 1, wherein the primary winding is also designed as a distributed winding, in which a first and a second part of the primary winding (P1, P2) are adjacent to each other in the plane, in which the first and second part of the secondary winding (S1, S2) are also arranged.

3. Medium-frequency transformer according to claim 1 or 2, wherein for a voltage ratio of 1.36 the primary side has 16 windings and the secondary side has 12 windings.

4. Medium-frequency transformer according to one of claims 1 to 3, wherein a bundle (14) of molded conductors in the secondary winding (S1, S2) and a bundle (13) of molded conductors in the primary winding (P; P1, P2) each have one or more hollow conductors, wherein the number of hollow conductors between the bundle (14) of molded conductors in the secondary winding (S1, S2) and the bundle (13) of molded conductors in the primary winding (P; P1, P2) can vary from each other.

5. Medium-frequency transformer according to one of claims 1 to 4, wherein the hollow conductors consist of an aluminum hollow profile.

6. Medium-frequency transformer according to one of claims 1 to 5, wherein deionized water is used as the coolant (10).

7. Medium-frequency transformer according to one of claims 1 to 6, wherein the material used for the core (K) is a nano-crystalline alloy with high saturation flux density, small size, low weight, low losses with very slight temperature dependence or negative temperature coefficient and mechanical stability, or ferrites with corresponding properties.

8. Medium-frequency transformer according to one of the preceding claims 1 to 7, wherein the core (K) is formed of a plurality of thin material layers extending perpendicular to the plane in which the primary and secondary windings (P; P1, P2, S1, S2) are arranged.

9. Medium-frequency transformer according to one of claims 1 to 8, wherein the core (K) consists of two halves situated in the plane where the primary and secondary winding (P; P1, P2, S1, S2) are arranged side by side, and a narrow air gap is formed between these core halves.

10. Medium-frequency transformer according to claim 9, wherein the air gap has a width of several 10 μm.

11. Medium-frequency transformer according to one of the preceding claims 1 to 10, wherein cooling tubes (KR) for cooling the core (K) are arranged on the face of the core (K).

12. Medium-frequency transformer according to one of the preceding claims 1 to 11, wherein the insulation (I) between the primary and secondary winding (P; P1, P2, S1, S2) is a high-voltage insulation that has insulation voltages up to 30 kV and is resistant to partial discharge.

13. Medium-frequency transformer according to claim 12, wherein an insulation is used as the insulation in which the respective winding is wound over its entire length several times with a mica tape, and the primary and secondary windings (P; P1, P2, S1, S2) are joined, impregnated under a vacuum pressure using an impregnating resin, and hardened.

14. Medium-frequency transformer according to claim 13, wherein modified epoxy is used as the impregnating resin.

15. DC/DC converter with a medium-frequency transformer according to one of claims 1 to 14, which insulates primary DC intermediate circuits from secondary DC intermediate circuits.

**Revendications**

1. Transformateur moyenne fréquence comportant :

    un noyau (N) ;
    un enroulement primaire (P) ;
    un enroulement secondaire ($S_1$,$S_2$) distribué de telle sorte que respectivement une première et une deuxième partie de l'enroulement secondaire ($S_1$,$S_2$) soient disposées sur un côté de l'enroulement primaire (P); dans lequel une isolation (I) est disposée entre la première partie de l'enroulement secondaire (S1) et l'enroulement primaire (P) ainsi qu'entre la deuxième partie de l'enroulement secondaire (S2) et l'enroulement primaire (P), respectivement, **carac-**

**térisé en ce que** l'enroulement primaire (P) ainsi que la première et la deuxième partie de l'enroulement secondaire (S$_1$, S$_2$), respectivement, sont conçus sous la forme d'un faisceau (14,13) de conducteurs creuses (11) formés, à travers lesquelles coule un liquide refroidissant (10), moyennant quoi les conducteurs creuses (11) de chaque faisceau (14,13) sont isolées conjointement comme un conducteur unique par une isolation (12).

2. Transformateur moyenne fréquence selon la revendication 1, dans lequel l'enroulement primaire est également réalisé comme un enroulement distribué, dans lequel une première et une deuxième partie de l'enroulement primaire (P$_1$, P$_2$) sont réalisées l'une par rapport à l'autre sur un plan adjacent, sur lequel la première et la deuxième partie de l'enroulement secondaire (S$_1$, S$_2$) sont également disposées.

3. Transformateur moyenne fréquence selon la revendication 1 ou 2, dans lequel le côté primaire présente 16 spires et le côté secondaire présente 12 spires afin d'obtenir un rapport de tension de 1,36.

4. Transformateur moyenne fréquence selon une des revendications 1 à 3, dans lequel un faisceau (14) de conducteurs formés dans l'enroulement secondaire (S$_1$, S$_2$) ainsi qu'un faisceau (13) de conducteurs formés dans l'enroulement primaire (P ; P$_1$, P$_2$) présentent respectivement un ou plusieurs conducteurs creuses, dans lequel le nombre de conducteurs creuses dans le faisceau (14) de conducteurs formés dans l'enroulement secondaire (S$_1$, S$_2$) et le faisceau (13) de conducteurs formés dans l'enroulement primaire (P ; P$_1$, P$_2$) peut différer.

5. Transformateur moyenne fréquence selon une des revendications 1 à 4, dans lequel les conducteurs creuses sont constituées d'un profil creux en aluminium.

6. Transformateur moyenne fréquence selon une des revendications 1 à 5, dans lequel de l'eau désionisée est utilisée comme liquide refroidissant (10).

7. Transformateur moyenne fréquence selon une des revendications 1 à 6, dans lequel, comme matériau de noyau (N), un alliage nano-cristallin est utilisé présentant une densité de flux de saturation élevée, une superficie réduite, un poids réduit, peu de pertes, une faible dépendance de température ou des coefficients de température négatifs et une stabilité mécanique, ou de la ferrite possédant des propriétés similaires.

8. Transformateur moyenne fréquence selon une des revendications précédentes 1 à 7, dans lequel le noyau (N) est constitué d'une pluralité de couches minces de matériau, qui s'étendent perpendiculairement au plan de disposition des enroulements primaire et secondaire (P ; P$_1$, P$_2$, S$_1$, S$_2$).

9. Transformateur moyenne fréquence selon une des revendications 1 à 8, dans lequel le noyau (N) est constitué de deux moitiés, qui se trouvent sur le plan, où les enroulements primaire et secondaire (P ; P$_1$, P$_2$, S$_1$, S$_2$) sont disposés l'un à côté de l'autre, et un entrefer fin est réalisé entre lesdites moitiés de noyau.

10. Transformateur moyenne fréquence selon la revendication 9, dans lequel l'entrefer présente une largeur de plusieurs 10µm.

11. Transformateur moyenne fréquence selon une des revendications précédentes 1 à 10, dans lequel, sur le côté avant du noyau (N), des tubes de refroidissement (TR) prévus pour refroidir le noyau (N) sont disposés.

12. Transformateur moyenne fréquence selon une des revendications précédentes 1 à 11, dans lequel l'isolation (I) entre les enroulements primaire et secondaire (P ; P$_1$, P$_2$, S$_1$, S$_2$) est une isolation contre des tensions élevées, qui présente des tensions d'isolation allant jusqu'à 30kV et résiste à une décharge partielle.

13. Transformateur moyenne fréquence selon la revendication 12, dans lequel une isolation est utilisée, dans laquelle un ruban de mica est enroulé plusieurs fois sur toute la longueur de l'enroulement respectif et les enroulements primaire et secondaire (P ; P$_1$, P$_2$, S$_1$, S$_2$) sont assemblés, puis imprégnés sous vide et durcis au moyen d'une résine d'imprégnation.

14. Transformateur moyenne fréquence selon la revendication 13, dans lequel une résine époxyde modifiée est utilisée comme résine d'imprégnation.

15. Transducteur CC/CC comportant un transformateur moyenne fréquence selon une des revendications 1 à 14, lequel isole des bobines de couplage-CC primaires contre des bobines de couplage-CC secondaires.

$U_{DCp}$

$C_R$   MFT   $C_R$

$U_{DCs}$

Fig.1

Fig.2

Fig.3

Fig.4

Fig.5

Fig.6

Fig.7

$$\frac{V_{Trafo}}{Liter}$$

$+\!+\!+$

$$\frac{V_{Trafo.opt}}{Liter}$$

n

EP 1 344 230 B1

( a )

( b )

Fig.8

Fig.9

KR

WS_i

WS_a

K

K

K

gute thermische
Leitfähigkeit

schlechte thermische
Leitfähigkeit

W

KR

Fig.10

EP 1 344 230 B1

Fig.11